# EUROPÄISCHE PATENTANMELDUNG

(11) **EP 2 226 776 A1**
(43) Veröffentlichungstag der Anmeldung: **08.09.2010**
(21) Anmeldenummer: 09008611.7
(22) Anmeldetag: 01.07.2009
(51) Int. Cl.: G08B 17/10, F16B 21/02

(54) **Haltevorrichtung für eine Überwachungseinrichtung**

(30) Priorität: 06.03.2009 DE 202009003064 U
(71) Anmelder: Gmür & Großmann GmbH, 81673 München (DE)
(72) Erfinder: Gmür, Peter, 80756 München (DE)
(74) Vertreter: Mischung, Ralf

(57) **Zusammenfassung**

Die Erfindung betrifft eine Vorrichtung zum sicheren lösbaren Fixieren einer Alarmeinrichtung, wobei zwischen einem an einer Wand oder Decke zu befestigenden Basisteil und einem an der Alarmeinrichtung befestigten Gehäuseteil eine einfache mechanische Verbindung hergestellt wird.

## Beschreibung

Die Erfindung bezieht sich auf eine Haltevorrichtung für eine Überwachungseinrichtung, insbesondere für einen an einer Decke oder Wand zu montierenden Rauchmelder, mit einem an der Decke oder Wand befestigten Basisteil und einem an dem Rauchmelder angeordneten Gehäuseteil, welches mit dem Basisteil verbindbar ist.

Als allgemeiner Stand der Technik ist es bereits bekannt, beispielsweise durch Verschraubung den Rauchmelder über das Gehäuseteil und das Basisteil mit der Decke zu verbinden. Weiterhin besteht auch die Möglichkeit einer Klebeverbindung zwischen dem Basisteil und der Decke. Weiterhin besteht im Sinne einer einfachen Montage auch die Möglichkeit einer Magnetverbindung zwischen einem Deckenelement und einem Rauchmelder.

Eine solche Verbindung genügt jedoch nicht den neuen und aktuellen Sicherheitsbestimmungen, wie sie speziell in der Norm DIN EN 146076 und DIN EN 14604 festgelegt sind. Insbesondere genügen herkömmliche Magnetverbindungen nicht der Norm DIN EN 1406, nach der ein Rauchmelder so mit einer Decke oder einer Wand verbunden sein muss, dass sich die Verbindung durch seitliche Schlageinwirkung nicht ohne weiteres lösen kann.

Entsprechend liegt der vorliegenden Erfindung die Aufgabe zugrunde, eine einfache Haltevorrichtung zu schaffen, welche insbesondere gemäß der vorgenannten Norm die einwandfreie Halterung einer Überwachungseinrichtung, insbesondere eines Rauchmelders an einer Decke bzw. einer Wand sicherstellt und gleichzeitig den Aufwand für die Montage des Rauchmelders minimiert.

Weiterhin liegt der Erfindung die Aufgabe zugrunde, den Aufwand beim Ersetzen der Batterie, beim Reinigen des Rauchmelders und bei der regelmäßigen Überprüfung der Funktionsfähigkeit dahingehend zu optimieren, dass der Rauchmelder für diese Tätigkeiten problemlos demontiert und nach Ausführung der Tätigkeiten wieder montiert werden kann.

Diese Aufgabe wird erfindungsgemäß gelöst durch mindestens einen stoßgesicherten Schnellverschluss, der zwischen einem an der Wand oder Decke anzuordnenden Basisteil und einem am Rauchmelder angeordneten Gehäuseteil hergestellt wird, wobei das Basisteil insbesondere mittels einer Klebeverbindung mit der Wand oder Decke verbindbar ist. Weiterhin ist das Basisteil vorzugsweise im Wesentlichen zweidimensional ausgebildet, und auch die mit dem Basisteil verschließend zusammenwirkenden Elemente des Gehäuseteils sind im Wesentlichen zweidimensional gestaltet.

Dadurch lässt sich auf einfache konstruktive Weise eine zuverlässige, platzsparende, leicht lösbare und dennoch gegen seitliche Stoßbelastungen unempfindliche Verbindung herstellen zwischen Basisteil und Gehäuseteil. Durch die konstruktiv ausgebildete Stoßsicherung, welche in die Haltevorrichtung integriert ist, wird damit sichergestellt, dass der Rauchmelder einwandfrei mit der Decke bzw. der Wand verbunden ist und damit die beschriebene Norm erfüllt.

Vorteilhafterweise sind die zum Zweck der Verbindung zusammenwirkenden Elemente im Wesentlichen zweidimensional ausgeführt, also bspw. scheibenförmig. Sie sind dadurch leicht und kostengünstig herzustellen und gestatten andererseits die Ausbildung der Verbindung über eine relativ geringe vertikale Höhe.

In weiterer Ausgestaltung der Erfindung kann der Schnellverschluss als schraubartige Verbindung ausgeführt sein, die sich leicht öffnen und schließen lässt. Dazu kann das Gehäuseteil (mit evtl. daran angeordnetem Rauchmelder) zunächst in eine Einsetzposition I gebracht werden, indem es in einer Einsetzrichtung im Wesentlichen senkrecht zum Basisteil auf dieses aufgesetzt wird, ohne dass dabei zunächst eine formschlüssige Verbindung hergestellt wird. Durch anschließendes Drehen des Gehäuseteils greifen vorzugsweise scheibenförmige Elemente des Gehäuseteils hinter Erhebungen des Basisteils, wobei gleichzeitig eine Zentrierung der beiden Teile und eine Verriegelung gegen Lösen in umgekehrter Einsetzrichtung erreicht werden kann.

In weiterer Ausgestaltung der Erfindung umfasst der Schnellverschluss am Gehäuseteil mindestens eine Kurvenscheibe, welche in eine zum Basisteil gehörende Grundplatte mit mindestens einer Gegenrast und mindestens einer Stoßsicherung einsetzbar und aus der Einsetzposition I in die arretierte Endposition II und umgekehrt überführbar ist.

In weiterer Ausgestaltung der Erfindung weist die Kurvenscheibe mindestens einen, zweckmäßigerweise jedoch zwei gegenüberliegende Nocken auf, die dann eine Art Doppelkurvenscheibe bilden. Die Außenkanten der Nocken haben - gemessen von einem Zentrum der Doppelkurvenscheibe - einen bis zu einem Endbereich E flach ansteigenden Radius. Die Gegenrast am Basisteil umfasst entsprechend mindestens eine Haltezunge mit aufgewölbtem Einschubbereich, so dass die Nocken wenigstens mit ihren Endbereichen E die Haltezunge zur Einnahme der arretierten Endposition II hintergreifen können. Nach Einnahme der Einsetzposition I verschwenken die Nocken also in der Kontaktebene zwischen Basisteil und Gehäuseteil durch Drehbewegung des Basisteils und gelangen dabei unter die Haltezungen am Basisteil, so dass ein vertikales Lösen der Verbindung unmöglich wird. Zugleich wirkt eine die Nocken seitlich einfassende, am Basisteil als aufgebogener Rand ausgebildete Stoßsicherung gegen ein seitliches Verschieben oder Verrutschen des Nockens, so dass Basisteil und Gehäuseteil auch gegen seitliche Stoßbelastung sicher miteinander verbunden sind.

Es versteht sich, dass anstelle von Nocken bzw. kurvenscheibenförmigen Elementen auch anders geformte Elemente mit radialen Vorsprüngen geeignet sind, um die Haltezungen in einer Verriegelungsposition zu hintergreifen. So würde grundsätzlich statt der Kurvenscheibe auch ein bspw. rechteckig geformtes Element ausreichen, welches mit seinen Längsseiten zunächst zwischen die Haltezungen der Grundplatte eingesetzt wird, und durch anschließendes Verdrehen mit den schmalen Stirnseiten unter die Haltezungen greift. Auch die Anzahl der Nocken bzw. radialen Vorsprünge kann variieren, wobei sie zweckmäßigerweise gleichmäßig über den Umfang verteilt und an die vorzugsweise in gleicher Art und Anzahl angeordneten Haltezungen angepasst sind.

Vorteilhafterweise können Basisteil und Gehäuseteil bereits in der Einsetzposition I durch Magnetkraft miteinander verbunden werden. Ein weiteres Verriegeln der Verbindung durch Drehen des Gehäuseteils relativ zum Basisteil ist anschließend oder zu einem späteren Zeitpunkt möglich, ohne dass das Gehäuseteil in der Einsetzposition dazu aktiv gehalten werden muss. Eine erste Halteverbindung ergibt sich daher bereits aus der Magnetverbindung.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine Seitenansicht eines mit Hilfe der erfindungsgemäßen Haltevorrichtung befestigten Rauchmelders an einer Decke;
- Fig. 2: den demontierten Rauchmelder in Seitenansicht;
- Fig. 3: eine Draufsicht auf die Grundplatte gemäß der Erfindung;
- Fig. 4: eine Seitenansicht auf die Grundplatte nach Fig. 3;
- Fig. 5: eine Draufsicht auf die Kurvenscheibe;
- Fig. 6a+b: die Montage des Rauchmelders von der Einsatzposition I in die Endposition II in Draufsicht bei nicht näher dargestelltem Rauchmelder.

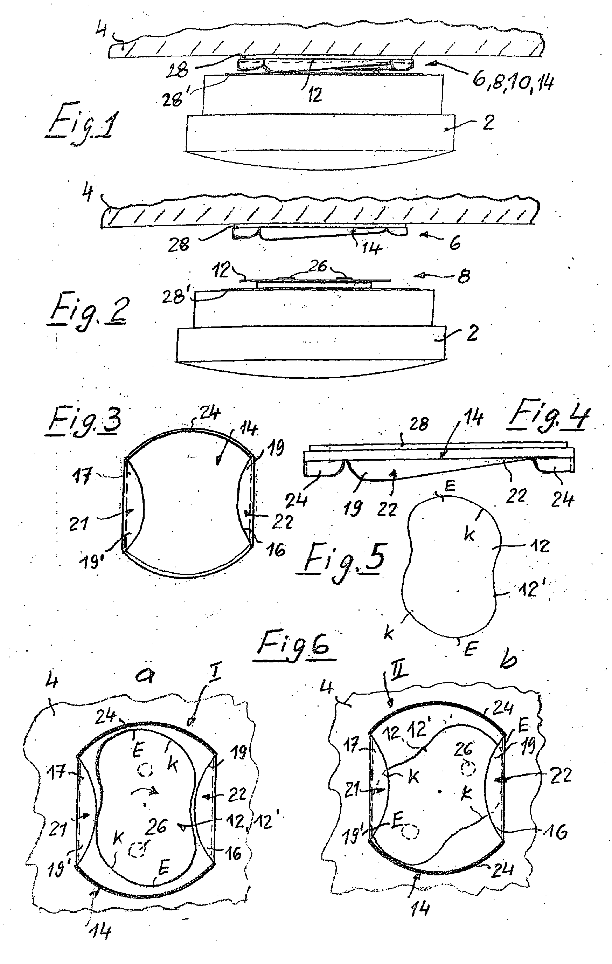

Gemäß Fig. 1 und 2 weist die vorliegende Erfindung eine Haltevorrichtung 1 auf, welche für eine Überwachungseinrichtung vorgesehen ist, insbesondere für einen an einer Decke 4 zu montierenden Rauchmelder 2. Diese Haltevorrichtung 1 weist ein an der Decke 4 befestigtes Basisteil 6 und ein an dem Rauchmelder 2 angeordnetes Gehäuseteil 8 auf, wobei das Gehäuseteil 8 mit dem Basisteil 6 verbindbar ist.

Ein flach ausgebildeter Schnellverschluss 10 als Element der Haltevorrichtung 1 besteht aus mindestens einer Kurvenscheibe 12 (Fig. 5), welche in einer Grundplatte 14 (Fig. 3 und 4) des Basisteils 6 mit mindestens einer Gegenrast 16, 17 verriegelbar ist.

Nach Fig. 3 weist diese Grundplatte 14 zwei einander gegenüberliegende Gegenrasten 16 bzw. 17 auf. Diese umfassen Haltezungen 21 und 22, welche gegenüberliegend zur Grundplatte 14 mit dieser jeweils einen Einschubbereich 19 bzw. 19' bilden. Diese Einschubbereiche 19 bzw. 19' sind aufgewölbt und verengen sich im Drehsinn der einzusetzenden Nockenscheibe. Die Haltezungen nähern sich dabei also der Ebene der Grundplatte 14 an und bilden einen Klemmspalt, in den die Nocken 12 durch Drehen des Basisteils - ausgehend von der Einsetzposition I - eingeführt werden.

Am Rand der Grundplatte ist als Stoßsicherung 24 ein aufgewölbter Rand vorgesehen, dessen Innenkanten 30 und 31 zur besseren Führung zweckmäßigerweise auf den Umfang der Kurvenscheibe 12 gemäß Fig. 5 abgestellt sind.

Die in Fig. 5 dargestellte, mit zwei gegenüberliegenden Nocken 12' ausgebildete Doppelkurvenscheibe 12 weist zwei diagonal einander gegenüberliegende, flach ansteigende Kurvenverläufe bzw. Radien K auf, welche jeweils in einem Endbereich E enden.

Die Grundplatte 14 ist gemäß Fig. 1 und 2 über Klebematerial 28 mit dem Basisteil 6 verbunden, welches dann seinerseits an der Decke 4 befestigt ist. Die Grundplatte 14 kann auch einstückig mit dem Basisteil 6 oder als Basisteil 6 ausgeführt sein. Die Doppelkurvenscheibe 12 ist über Klebematerial 28' an dem Gehäuseteil 8 befestigt, welches mit dem Rauchmelder 4 verbunden ist.

Die Grundplatte 14 und die Kurvenscheibe 12 können aus Blech bestehen, wobei gemäß Fig. 2 sowie Fig. 6a und Fig. 6b Magnetplättchen 26 auf der Kurvenscheibe bzw. auf der Grundplatte 14 angebracht sein können, um die Grundplatte 14 und die Doppelkurvenscheibe 12 (und mit ihr das Gehäuseteil 8) bereits in der Einsetzposition I miteinander verbinden zu können.

### Die Montage mithilfe der erfindungsgemäßen Haltevorrichtung 1 wird wie folgt durchgeführt:

Nach Fig. 2 und Fig. 6 wird der Rauchmelder 2 mit der Kurvenscheibe 12 senkrecht auf die Grundplatte 14 zubewegt, welche ihrerseits an der Decke 4 befestigt ist. Dabei nimmt das Gehäuseteil 8 nach Fig. 6a die Einsatzposition I ein, das heißt die Doppelkurvenscheibe 12 lagert sich zwischen den Haltezungen 21 und 22 der Grundplatte 14 ein. Die Stoßsicherung 24 dient dabei gleichzeitig als seitliche Montageführung, wobei dieser Montagevorgang außerdem durch die Magnetplättchen 26 erleichtert wird.

Nunmehr lässt sich gemäß Fig. 6a der Rauchmelder 2, d. h. die Doppelkurvenscheibe 12 im Uhrzeigersinn drehen, wodurch die Nocken mit ihren flach ansteigenden Kurvenbereichen bzw. Radien K unter die aufgewölbten Einschubbereiche 19 und 19' gleiten. Die Doppelkurvenscheibe 12 lässt sich solange weiter drehen, bis die Endbereiche E der Nocken unter den Haltezungen 21 und 22 durch den Klemmspalt zwischen Haltezungen 21, 22 und Grundplatte 14 geklemmt werden. Damit ist die arretierte Endposition II erreicht. Diese Situation ist in Fig. 6 b dargestellt. Damit ist der Rauchmelder funktionssicher an der Decke 4 befestigt, wobei diese Befestigung durch die Stoßsicherung 24 einwandfrei gegen Stoß- und Schlageinwirkungen geschützt ist.

Die Demontage erfolgt auf einfache Weise dadurch, dass der Rauchmelder entgegen dem Uhrzeigersinn aus der Position nach Fig. 6b in die nach Fig. 6a überführt wird, das heißt aus der Endposition II in die Einsatzposition I. Nunmehr kann der Rauchmelder aus der Position gemäß Fig. 1 in die gelöste Lage nach Fig. 2 überführt werden, und zwar gegen die Wirkung der Magnetplättchen 26.

Die erfindungsgemäße Haltevorrichtung 1 ist einfach aufgebaut, besitzt jedoch eine hohe Effektivität bezüglich der Montage bzw. Demontage und gewährleistet in jedem Fall eine Sicherheit gegen Stoß- und Schlageinwirkungen, so dass die vorgenannte Norm erfüllt ist. Die flache, im Wesentlichen zweidimensionale Ausbildung des Basisteils bzw. der Grundplatte in Kombination mit dem ebenfalls möglichst flach ausgebildeten Gehäuseteil gestattet die platzsparende Ausbildung einer gleichwohl sicheren Verbindung. Insbesondere können die Haltezungen bzw. die Stoßsicherung durch simples Umbiegen, Umbördeln oder Aufbiegen der scheibenförmigen Grundplatte gebildet werden, während die Doppelkurvenscheibe (und damit das wesentliche Verschlusselement des Gehäuseteils) als flache Scheibe ausgebildet sein kann, für die sogar überhaupt keine Verformung senkrecht zu ihrer Scheibenebene nötig ist.
Es versteht sich, dass durch kinematische Umkehr die zusammenwirkenden Verbindungselemente von Gehäuseteil und Basisteil auch ausgetauscht werden können.

## Patentansprüche

1. Haltevorrichtung (1) für eine Überwachungseinrichtung, insbesondere für einen an einer Decke (4) oder einer Wand zu montierenden Rauchmelder (2), mit einem an der Decke oder Wand - vorzugsweise mittels Klebeverbindung - befestigten, vorzugsweise zweidimensionalen Basisteil (6) und einem an dem Rauchmelder (2) angeordneten Gehäuseteil (8), welches mit dem Basisteil (6) verbindbar ist,
**dadurch gekennzeichnet,**
**dass** Basisteil (6) und Gehäuseteil (8) zusammen einen der DIN EN 1460 genügenden, stoßgesicherten Schnellverschluss (10) ausbilden, wobei die mit dem Basisteil (6) verschließend zusammenwirkenden Elemente des Gehäuseteils (8) im Wesentlichen zweidimensional ausgebildet sind.

2. Haltevorrichtung nach Anspruch 1, **dadurch gekennzeichnet, dass** der Schnellverschluss (10) mindestens eine Kurvenscheibe (12) aufweist, welche in eine Grundplatte (14) mit mindestens einer Gegenrast (16, 17) und mindestens einer Stoßsicherung (24) einsetzbar ist, und aus einer Einsetzposition (I) in die arretierte Endposition (II) und umgekehrt überführbar ist.

3. Haltevorrichtung nach Anspruch 1 und 2, **dadurch gekennzeichnet, dass** die Grundplatte (14) Teil des Basisteils (6) und die Kurvenscheibe (12) Teil des Gehäuseteils (8) ist.

4. Haltevorrichtung nach Anspruch 1 bis 3, **dadurch gekennzeichnet, dass** die Kurvenscheibe (12) wenigstens eine Nocke (12') aufweist, deren Außenkante (K) - gemessen von einem Zentrum der Kurvenscheibe (12) - einen bis zu einem Endbereich (E) flach ansteigenden Radius aufweist und dass die Gegenrast (16, 17) mindestens eine Haltezunge (21, 22) mit aufgewölbtem Einschubbereich (19, 19') aufweist, so dass die wenigstens eine Nocke (12') wenigstens mit ihrem Endbereich (E) die Haltezunge (21, 22) zur Einnahme der arretierten Endposition (II) hintergreift.

5. Haltevorrichtung nach Anspruch 4, **dadurch gekennzeichnet, dass** mehrere Nocken vorgesehen sind, deren Außenkanten K sich im gleichen Drehsinn mit ansteigendem Radius jeweils bis zu einem Endbereich (E) erstrecken, und dass die Gegenrast (16, 17) eine der Nockenanzahl entsprechende Anzahl von Haltezungen (21, 22) aufweist.

6. Haltevorrichtung nach Anspruch 4 und 5, **dadurch gekennzeichnet, dass** zwei Nocken diagonal einander gegenüberliegend auf dem Umfang der Kurvenscheibe (12) angeordnet sind, während zwei Gegenrasten (16, 17) mit jeweils einer Haltezunge (21, 22) zur Aufnahme der beiden Nocken in gleicher Weise an der Grundplatte (14) gegenüberliegen.

7. Haltevorrichtung nach einem der vorigen Ansprüche, **dadurch gekennzeichnet, dass** der Rand der Grundlatte (14) wenigstens teilweise als Montageführung und gleichzeitig als Stoßsicherung (24) ausgebildet ist.

8. Haltevorrichtung nach einem oder mehreren der vorhergehenden Ansprüche, **dadurch gekennzeichnet, dass** die Grundplatte (14) im Wesentlichen scheibenförmige, zweidimensionale Gestalt hat, wobei die Haltezungen (21, 22) durch umgebördelte Randbereiche der Scheibe gebildet sind.

9. Haltevorrichtung nach Anspruch 7, **dadurch gekennzeichnet, dass** die Stoßsicherung (24) auch durch wenigstens einen aufgebogenen Randbereich der Grundplatte (14) ausgebildet ist.

10. Haltevorrichtung nach dem vorhergehenden Anspruch, **dadurch gekennzeichnet, dass** zwei einander gegenüberliegende, aufgebogene Randbereiche als Stoßsicherung (24) dienen und gleichzeitig als Aufnahme und seitliche Führung für das Gehäuseteil (8) fungieren, wenn dieses in die Einsetzposition (I) eingesetzt wird.

11. Haltevorrichtung nach einem oder mehreren der vorhergehenden Ansprüche, **dadurch gekennzeichnet, dass** zwischen dem Basisteil (6) und dem Gehäuseteil (8) mindestens ein Magnet (26) angeordnet ist, so dass das Gehäuseteil in der Einsetzposition (I) durch Magnetkraft am Basisteil (6) haftet.

12. Haltevorrichtung nach einem oder mehreren der vorhergehenden Ansprüche, **dadurch gekennzeichnet, dass** die Kurvenscheibe (12) und/oder die Grundplatte (14) durch Klebematerial (28, 28') mit dem Basisteil (6) bzw. dem Gehäuseteil (8) verbunden sind.
